# EUROPEAN PATENT SPECIFICATION

(11) **EP 3 270 506 B1**
(45) Date of publication and mention of the grant of the patent: **28.12.2022**
(21) Application number: 15884532.1
(22) Date of filing: 09.03.2015
(51) Int. Cl.: H02P 9/04, F02N 11/04, H02P 25/22, F02N 11/08

(54) **STARTER GENERATOR DEVICE, AND STARTING AND GENERATING METHOD**
STARTERGENERATOR SOWIE START- UND GENERIERUNGSVERFAHREN
DISPOSITIF ET PROCÉDÉ DE GÉNÉRATION ÉLECTRIQUE ET DÉMARRAGE

(43) Date of publication of application: 17.01.2018
(73) Proprietor: Shindengen Electric MFG. Co., Ltd., Tokyo 1000004 (JP)
(72) Inventor: ARAI Tatsuya, Hanno-shi Saitama 357-8585 (JP)
(74) Representative: Dr. Weitzel & Partner
(86) International application number: PCT/JP2015/056846
(87) International publication number: WO 2016/143036

(56) References cited:
- EP-A2- 1 619 787
- WO-A2-2014/084393
- JP-A- 2003 083 209
- JP-A- 2003 083 209
- JP-A- 2003 174 790
- JP-A- 2005 184 967
- JP-A- 2007 259 644
- JP-B2- 4 329 527
- US-A1- 2010 001 672
- US-A1- 2011 057 591
- US-A1- 2012 291 739

## Description

### TECHNICAL FIELD

The present invention relates to a starter generator apparatus and a starting power generating method.

### BACKGROUND ART

Conventionally, ACG (AC generator) starter motors (starter generators) have been widely used in vehicles, particularly, small motorcycles. The ACG starter motor functions as a starter motor at start of an engine and functions as a power generator after the start of the engine (for example, Patent Document 1, Patent Document 2 and Patent Document 3).

Some ACG starter motors are designed such that the field is constituted of a permanent magnet, and winding specifications of an armature satisfy torque characteristics required at the start of the engine (Patent Document 1 and Patent Document 2). In such a configuration, if the ACG starter motor is used as a power generator, the amount of generated power exceeds the amount of power required for an electrical load, so that surplus power will be generated. Further, in such an ACG starter motor, a system for suppressing the generated power by short control of the semiconductor elements constituting a rectifier circuit is used. In this system, a current refluxing the ACG starter motor flows through power device elements that drive the armature winding or the ACG starter motor of the ACG starter motor so as to heat the power device elements. This causes power loss, thereby deteriorating the fuel efficiency of the vehicle and also worsening the engine friction. For this reason, in the configurations described in Patent Document 1 and Patent Document 2, a plurality of armature windings of the ACG starter motor are provided in parallel, armature windings to be used are switched between in a case where the ACG starter motor is used as the ACG starter motor and in a case where the ACG starter motor is used as a power generator.

### CITATION LIST

### [Patent Document]

[Patent Document 1] Japanese Patent Laid-Open Publication No. 2003-83209
[Patent Document 2] Japanese Patent No. 4851184
[Patent Document 3] Japanese Patent No. 4329527
[Patent Document 4] US2010001672A1

### DISCLOSURE OF THE INVENTION

### Problems to be Solved by the Invention

However, the configurations described by Patent Document 1 to Patent Document 3 have the following problems. First, in the configuration described in Patent Document 1, although the armature winding is formed of four windings connected in parallel, one phase among the three phases in all the windings are commonly connected. In other words, the winding used as an ACG starter motor and the winding used as a power generator are connected to a common node, and thus are not fully disconnected. Additionally, selection of the winding is performed in the relay. For this reason, a decrease in life of the contact is an issue in a case where the relay is frequently turned on and off, as in the case of idle stop control. Further, in the configuration in which one phase of each winding is connected in common, in a case where the relay is replaced with MOSFETs, the following points will be problems. In other words, in the case of the relay, the current can be cut off in both directions by turning off the contact point. On the other hand, in the case of MOSFETs, even if the MOSFETs are turned off, the current flows to the parasitic diode between the drain and the source, so that the current only in one direction can be cut off. Therefore, in a case where the MOSFETs instead of the relay are used to disconnect the windings, the winding used as the ACG starter motor is not disconnected, so that the generated power is excessively supplied from the winding of the ACG starter motor, thereby causing an increase in power loss.

Additionally, the configuration described in Patent Document 2 has problems that it is for controlling a neutral point, it can be used only in a case where armature windings are star-connected, and it is not applicable to a case where the armature windings are delta-connected. Since a neutral point is not present in the delta connection, in consideration of a combination of delta connection and armature windings, the separated relay is increased, thereby causing the higher costs and the complexity of wirings.

Further, in the configuration described in Patent Document 3, the ACG starter motor is constituted of two armature windings, and has a configuration that only one of the armature windings is used when the ACG starter motor is used as an ACG starter motor, while two windings are used when the ACG starter motor is used as a power generator. Additionally, unlike the configurations described in Patent Document 1 and Patent Document 2, in the configuration described in Patent Document 3, the field is constituted with a winding. In this configuration, normally, a current is supplied to the field winding with a brush. As compared with the case of constituting the field using a permanent magnet, the configuration described in Patent Document 3 has problems that it is difficult to miniaturize the apparatus, and it is not suitable to the direct mounting onto a crankshaft, as illustrated in Patent Document 2.

The present invention has an object to provide a starter generator apparatus and a starting power generating method which can solve the above-described problems.

### Means for Solving the Problems

A starter generator apparatus according to one aspect of the present invention according to the enclosed claim 1.

A starting power generating method according to another aspect of the present invention according to the enclosed claim 4.

### Effects of the Invetion

According to the aspects of the present invention, it is possible to easily improve the control characteristics of the starter generator, such as a reduction in power loss.

### BRIEF DESCRIPTION OF THE DRAWINGS

FIG. 1 is a block diagram showing a configuration example of an embodiment of the present invention.
FIG. 2 is a view schematically showing a configuration example of a starter generator 1 shown in FIG. 1.
FIG. 3 is a circuit diagram showing a power conversion unit 6 and winding portions 11 and 12 shown in FIG. 1.
FIG. 4 is a diagram showing an example of energization modes of the power conversion unit 6 shown in FIG. 3.
FIG. 5 is a diagram showing an example of a current flow in the circuit diagram shown in FIG. 3.
FIG. 6 is a diagram showing an example of energization modes of the power conversion unit 6 shown in FIG. 3.
FIG. 7 is a diagram showing an example of a current flow in the circuit diagram shown in FIG. 3.
FIG. 8 is a flowchart showing an operation example of a control unit 7 shown in FIG. 1.
FIG. 9 is a circuit diagram showing the power conversion unit 6 shown in FIG. 1 (power conversion unit 6a shown in FIG. 9) and the winding portions 11 and 12.
FIG. 10 is a diagram showing an example of energization modes of the power conversion unit 6a shown in FIG. 9.
FIG. 11 is a diagram showing an example of a current flow in the circuit diagram shown in FIG. 9.
FIG. 12 is a diagram showing an example of energization modes of the power conversion unit 6a shown in FIG. 9.
FIG. 13 is a diagram showing an example of a current flow in the circuit diagram shown in FIG. 9.
FIG. 14 is a block diagram showing a configuration example of an embodiment of the present invention.
FIG. 15 is a view schematically showing a configuration example of a starter generator 1b shown in FIG. 14.

### MODE FOR CARRYING OUT THE INVENTION

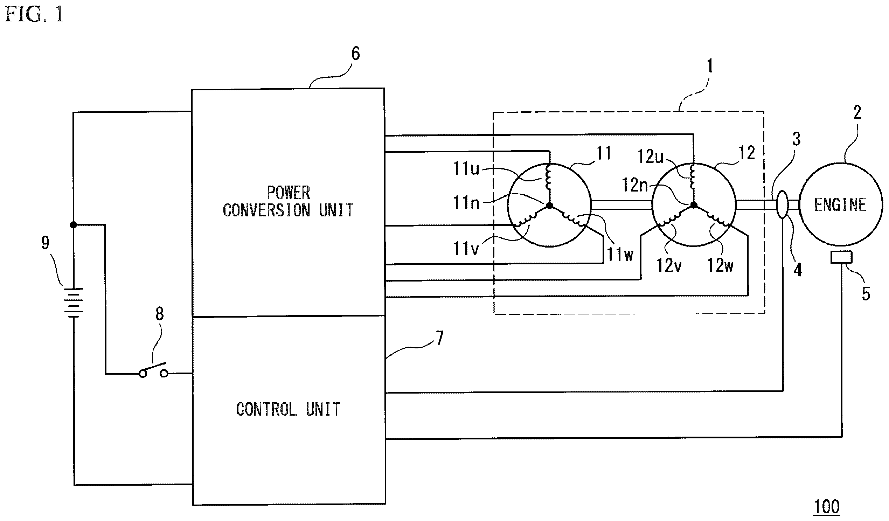

Hereinafter, embodiments of the present invention will be described with reference to the accompanying drawings. FIG. 1 is a block diagram showing a configuration example of a starting power generation control system (starter generator) 100 of an embodiment of the present invention. The starting power generation control system 100 shown in FIG. 1 includes a starter generator (ACG starter motor) 1, an engine 2, a crankshaft 3, a rotation angle sensor 4, an engine water temperature gauge 5, a power conversion unit 6, a control unit 7, a starter switch 8, and a battery 9.

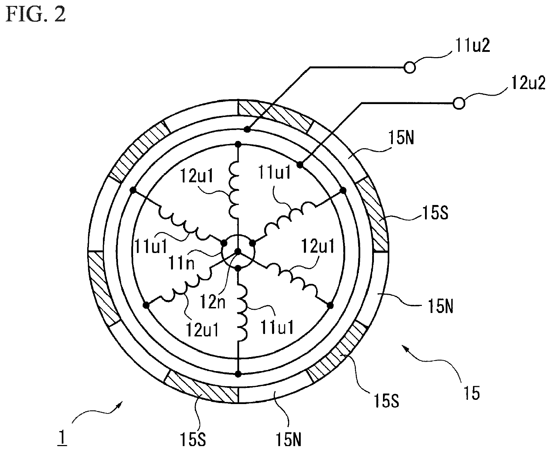

The starter generator 1 is directly connected to the crankshaft 3 and rotates in synchronism with the rotation of the engine 2. The starter generator 1 operates as a starter motor or ACG under control of the power conversion unit 6. The starter generator 1 includes a winding portion 11, a winding portion 12, and a field portion 15 shown in FIG. 2. The winding portion 11 includes coils 11u, 11v, and 11w which constitute a star-connected three-phase coil (polyphase coil). The winding portion 12 includes coils 12u, 12v and 12w which constitute a star-connected three-phase coil. A neutral point 11n is a neutral point of the star connection that constitutes the winding portion 11. A neutral point 12n is a neutral point of the star connection that constitutes the winding portion 12. The coils 11u to 11w and the coils 12u to 12w are wound on the same armature core (not shown), and are a pair of armature windings electrically insulated from each other. Here, the winding portion 11, the winding portion 12, and the armature core (not shown) constitute an armature unit. Here, the connection of the winding portion 11 and the winding portion 12 is not limited to the star connection and may be a delta connection.

FIG. 2 is a view, viewed from an axial direction, schematically showing a configuration example of the winding portion 11, the winding unit 12, and the field portion 15 of the starter generator 1. Here, FIG. 2 shows only the coil 11u and the coil 12u. In the configuration example shown in FIG. 2, the starter generator 1 is an outer rotor type brushless motor where the field portion 15 is constituted of the plural pairs of N-pole permanent magnets 15N and S-pole permanent magnets 15S. The coil 11u is constituted of three windings arranged at 120-degree intervals with respect to the armature core (not shown). One ends of three windings of the coil 11u are connected in common to the neutral point 11n, while the other ends thereof are connected in common to a terminal 11u2. The coil 12u is constituted of three windings arranged at 120-degree intervals with respect to the armature core (not shown) and is shifted by 60 degree from the coil 11u. One ends of three windings of the coil 12u are connected in common to the neutral point 12n, while the other ends thereof are connected in common to a terminal 12u2.

In FIG. 1, the engine 2 is, for example, a power generator mounted on a small two-wheeled vehicle. The crankshaft 3 is a component of the engine 2, which is a shaft for converting reciprocating motion of a piston (not shown) provided in the engine 2 into rotational motion. The rotation angle sensor 4 is a sensor for detecting a rotation angle (crank angle) of the crankshaft 3. The engine water temperature gauge 5 is a sensor for detecting a temperature of cooling water of the engine 2.

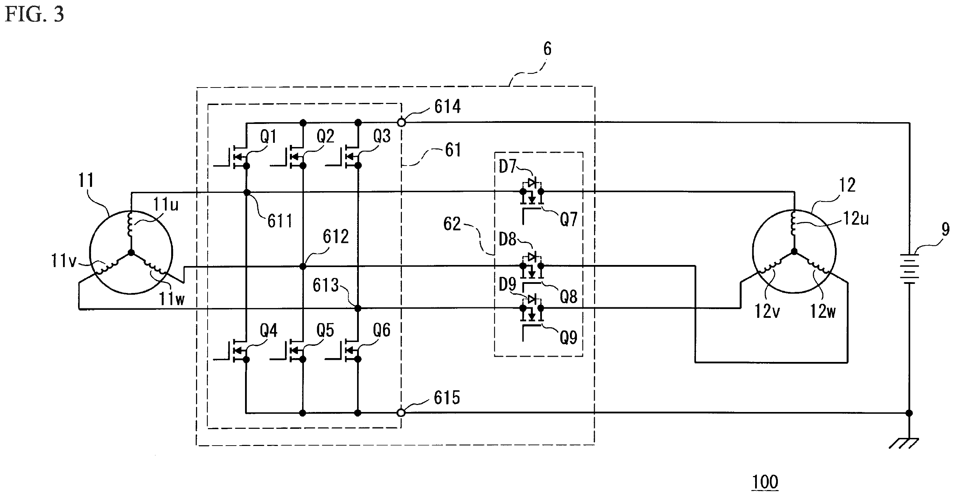

As shown in FIG. 3, the power conversion unit 6 includes an orthogonal transformation unit 61 and a switch unit 62. The orthogonal transformation unit 61 includes six n-channel MOSFETs (hereinafter referred to as MOSFETs) (Q1) to (Q6), which constitutes a three-phase bridge orthogonal transformation circuit. In the orthogonal transformation unit 61, a DC terminal 614 on a positive side (high side) of the DC input/output line is connected to a positive electrode of the battery 9, while a DC terminal 615 on a negative side (low side) is connected to a negative electrode of the battery 9. The orthogonal transformation unit 61 is connected to the battery 9. A switch unit 62 connects the orthogonal transformation unit 61 selectively to one or both of the winding portion 11 and the winding portion 12, so that the orthogonal transformation unit 61 performs bidirectional AC-DC power conversion. Additionally, AC terminals (first alternate terminals) 611, 612, and 613 of the orthogonal transformation unit 61 are connected to end portions of the respective coils 11u, 11w, and 11v of the winding portion 11.

The switch unit 62 includes three MOSFETs (Q7), (Q8) and (Q9), so that the switch unit 62 connects or disconnects the coils 12u, 12w, 12v of the winding portion 12 to or from the respective AC terminals 611, 612, 613 of the orthogonal transformation unit 61. In this case, three MOSFETs (Q7), (Q8), (Q9) are interposed between each end portion of the coils 12u, 12w, 12v of the winding portion 12 and each of the AC terminals 611, 612, 613 of the orthogonal transformation unit 61 connected to the respective coils 11u, 11w, 11v of the winding unit 11. Additionally, three MOSFETs (Q7), (Q8), (Q9) turn on or off to connect or disconnect the end portions of the coil 12u, 12w, 12v of the winding portion 12 to or from the respective AC terminals 611, 612, 613.

Further, MOSFETs (Q7), (Q8), (Q9) are provided respectively with parasitic diodes D7, D8, D9 between the drain and the source thereof. In this case, the direction of the parasitic diodes D7, D8, D9 are the same with respect to the respective AC terminals 611, 612, 613, while anodes are connected to the respective AC terminals 611, 612, 613. Additionally, cathodes are connected to the end portions of the respective coils 12u, 12w, 12v of the winding portion 12. The direction of the parasitic diodes D7, D8, D9 are aligned in this way, thereby making it possible, when MOSFETs (Q7), (Q8), (Q9) are turned off, to cut off the inflow of a current from the battery 9 to the winding portion 12 through the orthogonal transformation unit 61 during the motor operation and to cut off the outflow of a current from the winding portion 12 to the battery 9 through the orthogonal transformation unit 61 during power generation operation. Here, the direction of the parasitic diodes D7, D8, D9 (i.e., the direction of the drains and sources of MOSFETs (Q7), (Q8), (Q9)) may be opposite to the illustrated direction.

Here, the power conversion unit 6 includes a driver circuit (not shown) for performing on-off control on MOSFETs (Q1) to (Q9). The driver circuit performs on-off control on MOSFETs (Q1) to (Q9) in accordance with a predetermined energization mode notified from the control unit 7. Additionally, the power conversion unit 6 includes a sensor for detecting a current flowing through each MOSFET. Thereby, the power conversion unit 6 can, for example, turn off MOSFETs (Q7) to (Q9) at the time the current flowing through MOSFETs becomes zero (or nearly zero).

The control unit 7 is a device for performing ignition control and the like of the engine 2. In this case, the control unit 7 receives a signal output from the rotational angle sensor 4, a signal output from the engine water temperature gauge 5, and a signal output from the starter switch 8. Additionally, the control unit 7 notifies the driver circuit (not shown) included in the power conversion unit 6 of an energization mode of MOSFETs (Q1) to (Q9). The control unit 7 selects whether or not to use the winding portion 12 in addition to the winding portion 11, in accordance with a state of the load in respective cases where the starter generator 1 is used as a power generator and where the starter generator 1 is used as a starter motor for starting the engine. In the case where the starter generator 1 is used as the starter motor, the control unit 7 selects whether or not to use the winding portion 12 in addition to the winding portion 11, in response to an output of the engine water temperature gauge 5, an output of the rotation angle sensor 4, and the like, based on the temperature of the coolant water of the engine 2 or the position of the piston. For example, if the coolant temperature is equal to or below a predetermined reference value, the engine 2 has been cooled, and the viscosity of the engine oil is relatively large, so that the torque to drive the crankshaft 3 becomes relatively large at the start of the engine 2. Therefore, in such a case, the control unit 7 uses the winding portion 12 in addition to the winding unit 11 to drive the starter generator 1 as the motor. Additionally, for example, in a single-cylinder engine, the torque to drive the crankshaft 3 changes at the start of the engine 2 depending on the position of the piston and the opening and closing state of the valve of the engine 2. Additionally, this change varies depending on the number of engine strokes and the number of cylinders. The control unit 7 detects the position of the piston and the opening and closing condition of the valve in accordance with, for example, a signal output from a sensor (not shown) and the processing contents of engine control. In a case where the torque to drive the crankshaft 3 is predicted to become relatively large at the start of the engine 2, the control unit 7 uses the winding portion 12 in addition to the winding unit 11 to drive the starter generator 1 as the motor.

On the other hand, the starter switch 8 is a switch which a user operates at the start of the engine 2. Additionally, the battery 9 is a secondary battery.

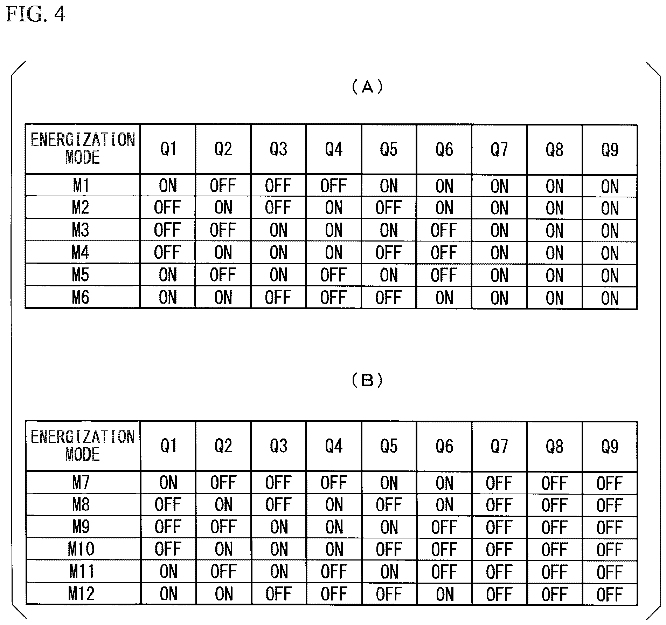

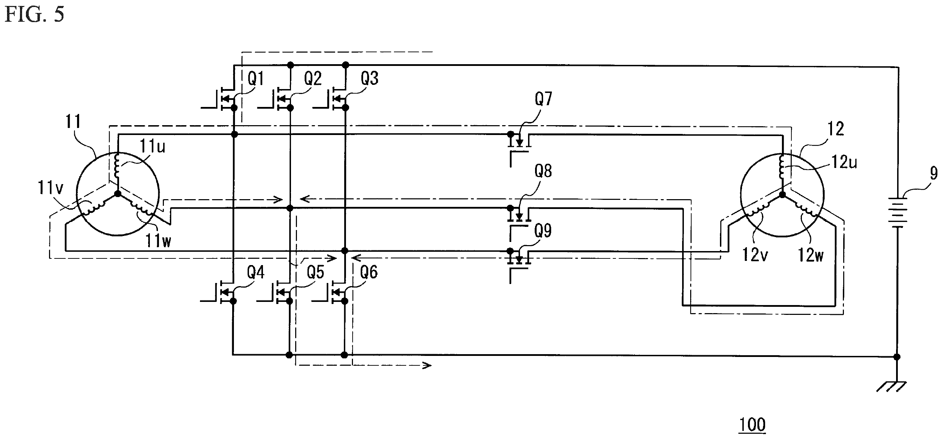

Next, an operation example of the power conversion unit 6 shown in FIG. 3 is described with reference to FIGS. 4 to 7. FIG. 4 is a diagram showing an example of the energization modes of the power conversion unit 6 shown in FIG. 3 in a case where the starter generator 1 is used as the starter motor. Hereinafter, control to be performed in the case where the starter generator 1 is used as the starter motor is referred to as motor control. Here, each energization mode shown in FIG. 4(A) and FIG. 4(B) is one in a case of 180-degree energization control. FIG. 4(A) and FIG. 4(B) show a combination of ON (on) or OFF (OFF) operation of respective MOSFETs (Q1) to (Q9) of the power conversion unit 6. FIG. 4(A) is a case where both the winding portion 11 and the winding portion 12 are used. FIG. 4(B) is a case where only the winding portion 11 is used. FIG. 5 is a diagram showing paths of current in the circuit diagram shown in FIG. 3 in the energization mode M1 shown in FIG. 4(A) and the energization mode M7 shown in FIG. 4(B).

When both the winding portion 11 and the winding portion 12 are used in the case of the motor control, the control unit 7 selects one of the energization modes M1 to M6 shown in FIG. 4(A) and notifies the power conversion unit 6 of the selected mode. In other words, based on an output of the rotation angle sensor 4, the control unit 7 repeatedly selects any one of the energization modes M1 to M6 shown in FIG. 4(A) in accordance with the angle of the field portion 15, and notifies the power conversion unit 6 of the selected energization mode in each case. In this case, MOSFETs (Q1) to (Q6) are controlled to turn ON or OFF in accordance with a combination of ON and OFF according to the energization mode. Additionally, MOSFETs (Q7) to (Q9) are all controlled to turn ON.

On the other hand, when only the winding part 11 is used in the case of the motor control, the control unit 7 selects one of the energization modes M7 to M12 shown in FIG. 4(B), and notifies the power conversion unit 6 of the selected energization mode. In other words, based on an output of the rotation angle sensor 4, the control unit 7 repeatedly selects one of the energization modes M7 to M12 shown in FIG. 4(B) in accordance with the angle of the field portion 15, and notifies the power conversion unit 6 of the selected energization mode in each case. In this case, MOSFETs (Q1) to (Q6) are controlled to turn ON or OFF. Additionally, MOSFETs (Q7) to (Q9) are all controlled to turn OFF.

FIG. 5 shows paths of current in the energization mode M1 shown in FIG. 4(A) by a dashed arrow and a chained arrow. The path indicated by the dashed arrow indicates the flow of the current flowing through the winding portion 11. The path indicated by the chained arrow is the flow of the current flowing through the winding portion 12. In this case, MOSFET (Q1) is ON, MOSFET (Q2) is OFF, MOSFET (Q3) is OFF, MOSFET (Q4) is OFF, MOSFET (Q5) is ON, and MOSFET (Q6) is ON. Additionally, MOSFETs (Q7) to (Q9) are all ON. On the other hand, in the energization mode M7 shown in FIG. 4(B), the path indicated by the chained arrow passing through the winding portion 12 is cut off, so that the current flows only in the path indicated by the dashed arrow passing through the winding portion 11. In this case, MOSFET (Q1) is ON, MOSFET (Q2) is OFF, MOSFET (Q3) is OFF, MOSFET (Q4) is OFF, MOSFET (Q5) is ON, and MOSFET (Q6) is ON. Additionally, MOSFETs (Q7) to (Q9) are all OFF.

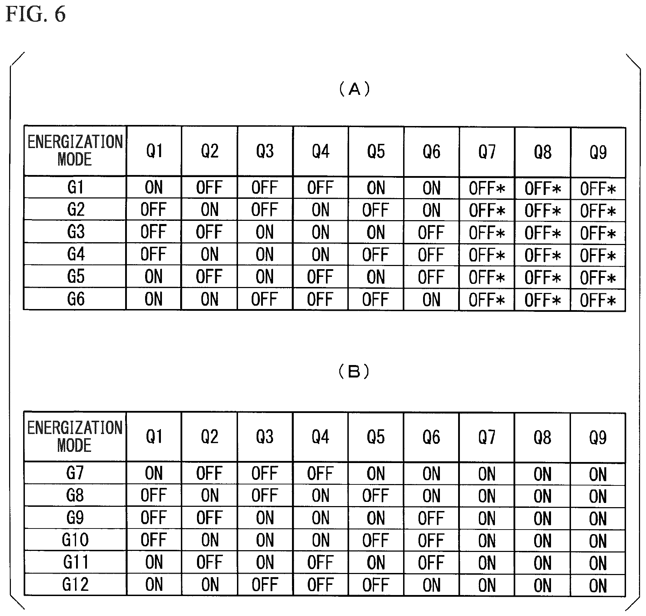

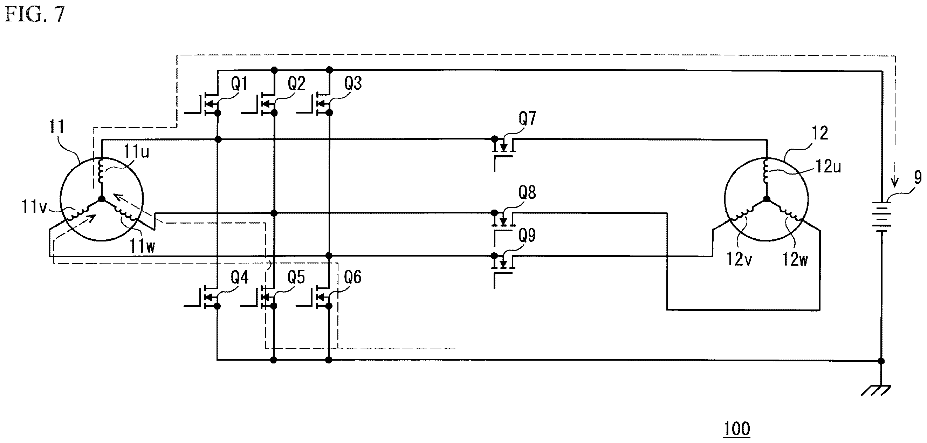

Next, energization modes of the power conversion unit 6 shown in FIG. 3 in the case where the starter generator 1 is used as the power generator will be described with reference to FIGS. 6 and 7. Hereinafter, control to be performed in the case where the starter generator 1 is used as the power generator is referred to as power generation control. FIG. 6 is a diagram showing an example of the energization modes of the power conversion unit 6 shown in FIG. 3 in the case of the power generation control. Here, FIG. 6(A) and FIG. 6(B) show a combination of ON (on) or OFF (off) operation of MOSFETs (Q1) to (Q9) of the power conversion unit 6. FIG. 6(A) is the case where only the winding portion 11 is used. FIG. 6(B) is the case where both the winding portion 11 and the winding portion 12 are used. FIG. 7 is a diagram showing a path of current in the circuit diagram shown in FIG. 3 in the energization mode G1 shown in FIG. 6(A).

When only the winding portion 11 is used in the case of power generation control, the control unit 7 selects one of the energization modes G1 to G6 shown in FIG. 6(A), and notifies the power conversion unit 6 of the selected energization mode. In other words, based on an output of the rotation angle sensor 4, the control unit 7 repeatedly selects any one of the energization modes G1 to G6 shown in FIG. 6(A) in accordance with the angle of the field portion 15, and notifies the power conversion unit 6 of the selected energization mode in each case. In this case, MOSFETs (Q1) to (Q6) are controlled to turn ON or OFF. Additionally, MOSFETs (Q7) to (Q9) are all controlled to turn OFF. However, in the case of the power generation control, if the voltage of the battery 9 exceeds a predetermined regulation voltage, the power conversion unit 6 performs, according to the voltage of the battery 9, short control or the like appropriately using MOSFETs (Q1) to (Q6), thus controlling the generated voltage. Further, in a case where MOSFETs (Q7) to (Q9) are turned OFF, that is, for example, in a case where the motor control is switched to the power generation control, the power conversion unit 6 monitors the current flowing through respective MOSFETs (Q7) to (Q9), and turns off MOSFETs (Q7) to (Q9) when the current of each MOSFET becomes 0A or nearly 0A. "^{∗}" appended to "OFF" means that when respective MOSFET (Q7) to (Q9) are turned off, instead of turning OFF all MOSTETs at once, sequentially turning OFF MOSFETs when the magnitude of the current flowing through each of MOSFETs (Q7) to (Q9) becomes a predetermined value.

On the other hand, when both the winding portion 11 and the winding portion 12 are used in the case of the power generation control, the control unit 7 selects one of the energization modes G7 to G12 shown in FIG. 6(B), and notifies the power conversion unit 6 of the selected energization mode. In other words, based on an output of the rotation angle sensor 4, the control unit 7 repeatedly selects any one of the energization modes G7 to G12 shown in FIG. 6(B) in accordance with the angle of the field portion 15, and notifies the power conversion unit 6 of the selected energization mode in each case. In this case, MOSFETs (Q1) to (Q6) are controlled to turn ON or OFF. Additionally, MOSFETs (Q7) to (Q9) are all controlled to turn ON. However, in the case of the power generation control, if the voltage of the battery 9 exceeds the predetermined regulation voltage, the power conversion unit 6 performs, according to the voltage of the battery 9, short control or the like appropriately using MOSFETs (Q1) to (Q6), thus controlling the generated voltage.

FIG. 7 shows a path of current in the energization mode G1 shown in FIG. 6(A) by a dashed arrow. The path indicated by the dashed arrow indicates the flow of the current flowing through the winding portion 11. In this case, MOSFET (Q1) is ON, MOSFET (Q2) is OFF, MOSFET (Q3) is OFF, MOSFET (Q4) is OFF, MOSFET (Q5) is ON, and MOSFET (Q6) is ON. Additionally, MOSFETs (Q7) to (Q9) are all OFF.

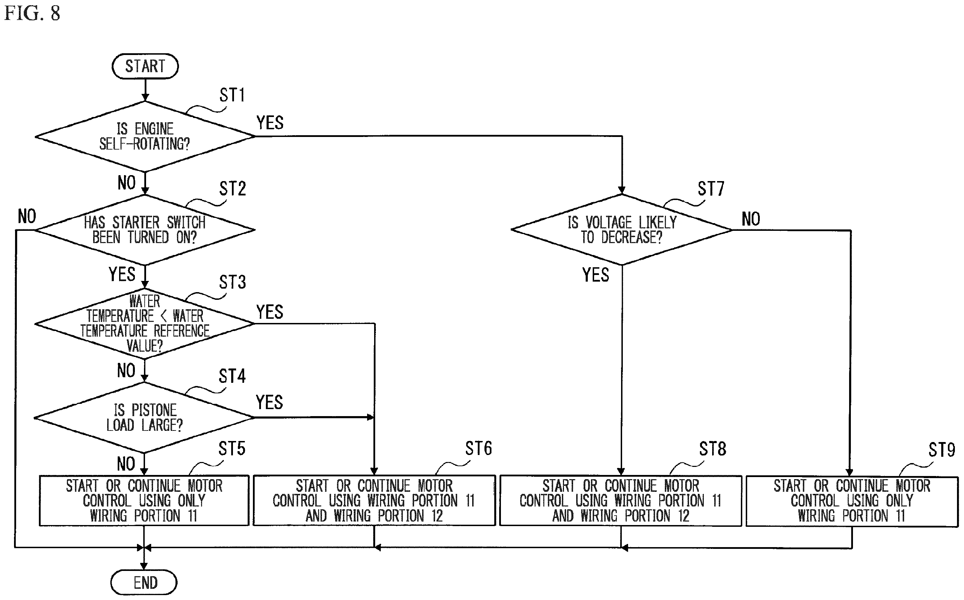

Next, an operation example of the control unit 7 is described with reference to FIG. 8. For example, when an ignition switch (not shown) is turned on, the control unit 7 repeatedly performs the processing shown in FIG. 8 at predetermined intervals. First, the control unit 7 determines based on a result of the detection by the rotation angle sensor 4 or the like whether or not the engine 2 is self-rotating (step ST1). If the engine 2 is not self-rotating (step ST1: "NO"), the control unit 7 determines whether or not the starter switch 8 has been turned on (step ST2). If the starter switch 8 has not been turned on (step ST2: "NO"), the control unit 7 ends the processing shown in FIG. 8. On the other hand, if the starter switch 8 has been turned on (step ST2: "YES"), the control unit 7 determines based on a result of the detection by the engine water temperature gauge 5 whether or not the water temperature is less than a predetermined water temperature reference value (step ST3).

If the water temperature is not less than the predetermined water temperature reference value (step ST3: "NO"), the control unit 7 determines whether or not a piston load of the engine 2 is large (step ST4). The piston load of the engine 2 means the drive resistance of the piston which changes depending on the position of the piston or the state of the valve. Additionally, that the piston load is large means that the drive resistance of the piston is within a predetermined range. The control unit 7 confirms the position of the piston and the state of the valve based on, for example, values of various sensors used for the engine control, and obtains the drive resistance of the piston based on the result of the confirmation. Then, the control unit 7 determines whether or not the obtained drive resistance of the piston is within a predetermined range. If the piston load is not large (step ST4: "NO"), the control unit 7 starts the motor control using only the winding portion 11 (step ST5). In other words, if the water temperature is equal to or greater than the water temperature reference value (step ST3: "NO"), and the piston load is not large (step ST4: "NO"), the control unit 7 starts, or continues if already started, the motor control using only the winding unit 11 (step ST5).

On the other hand, if the water temperature is less than the water temperature reference value (step ST3: "YES"), or if the piston load is large (step ST4: "YES"), the control unit 7 starts, or continues if already started, the motor control using the winding portion 11 and the winding portion 12 (step ST6).

Further, at step ST1, if the engine 2 is determined to be self-rotating (step ST1: "YES"), the control unit 7 determines whether or not the voltage of the battery 9 is likely to decrease (step ST7). The voltage of the battery 9 is likely to decrease in cases where the voltage of the battery 9 is below the predetermined regulation voltage, or where a ratio of time for which a control to suppress the generated power by short control or the like is being performed is almost zero (i.e., below a predetermined reference value). If the voltage of the battery 9 is likely to decrease (step ST7: "YES"), the control unit 7 starts, or continues if already started, the power generation control using the winding portion 11 and the winding portion 12 (step ST8). On the other hand, if the voltage of the battery 9 is not likely to decrease (step ST7: "NO"), the control unit 7 starts, or continues if already started, the power generation control using only the winding unit 11 (step ST9).

As described above, the starter generator apparatus 100 of the present embodiment includes: the starter generator 1 (ACG starter motor) including the armature unit including the winding portion 11 and the winding portion 12 which are arranged in parallel, each of the winding portion and the winding constituting a three-phase coil (polyphase coil), and the field unit including the permanent magnet; the orthogonal transformation unit 61 connected to the first winding portion 11, or the winding portion 11 and the winding portion 12, and configured to bidirectionally convert an electric power between a direct current and an alternating current; and the plurality of MOSFETs (switching elements) (Q7) to (Q9) interposed between each end portion of the winding portion 12 and each of the alternate terminals 611, 612, 613 of the orthogonal transformation unit 61 connected to each end portion of the winding portion 11, and configured to perform connection and disconnection of the end portions of the winding portion 12 to and from the respective alternate terminals 611, 612, 613. According to this configuration, it is possible to easily improve the control characteristics of the starter generator 1 (ACG starter motor), such as a reduction in power loss.

Additionally, as described above, according to the present embodiment, the winding portion is divided into two so that either one or both are selectively used, thereby optimizing the balance between the power generation and the electric load. According to this configuration, when the motor with the winding specifications designed to meet the torque characteristic of the starter motor is used as a power generator, it is possible to reduce the surplus power generated by the unbalance between the power generation and the electric loads. In other words, it is possible to reduce the reflux current of the winding portion and heat generation (power loss) of the windings and the power device elements. Therefore, it is possible to easily reduce the excess power at the time of the power generation without impairing the motor torque. This makes it possible to reduce the fuel efficiency and the friction of the engine 2.

Further, in a case where the temperature of the engine 2 is equal to or greater than the reference value so that the engine 2 is easily warmed and rotated, the number of windings in use at the time of the motor control is reduced, thereby making it possible to reduce the power consumption of the battery 9.

Moreover, it is possible to relatively reduce the accuracy of the required conduction angle (output direction) at the time of the power generation control.

Additionally, it is possible to reduce the heat generation of the armature winding and the power device by reducing the reflux current.

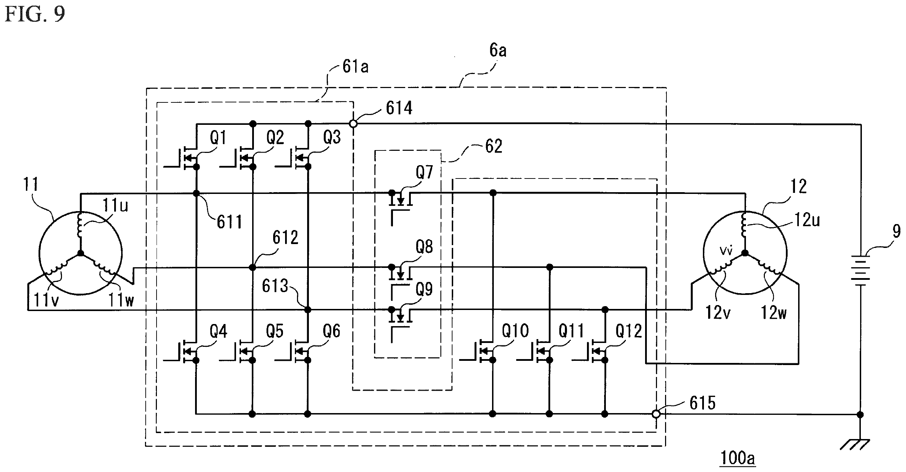

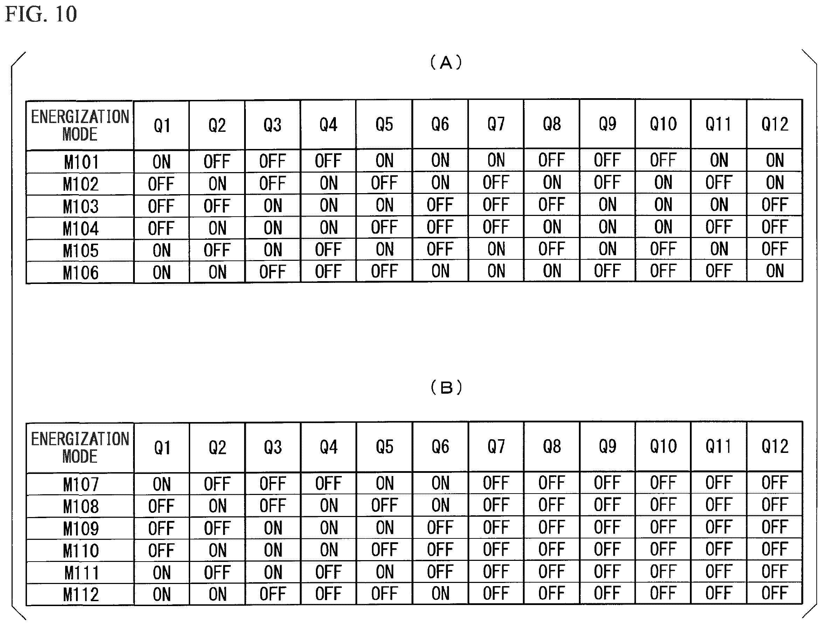

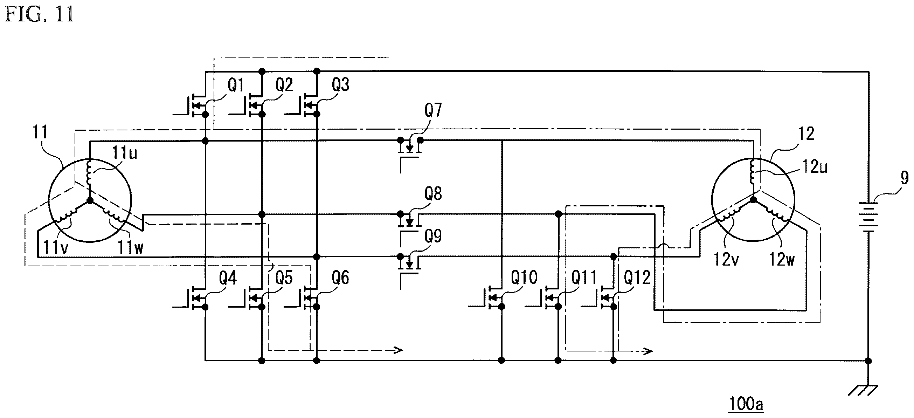

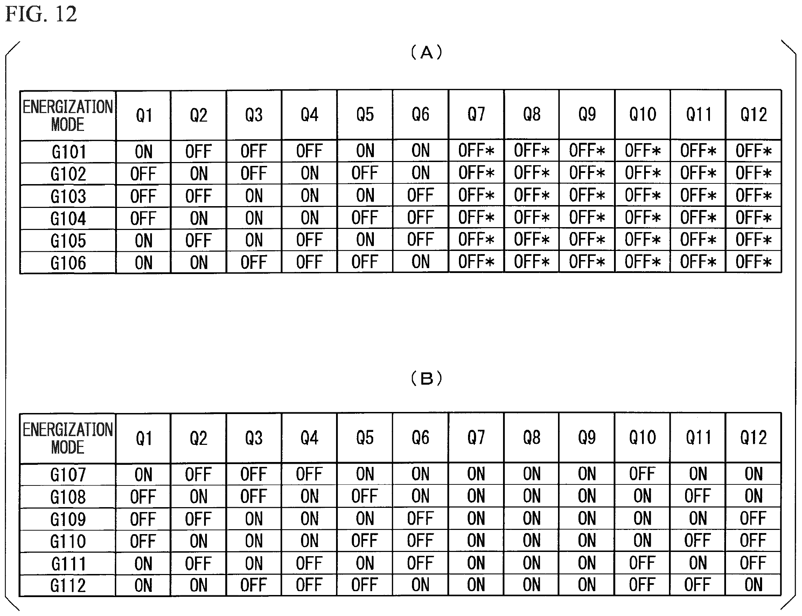

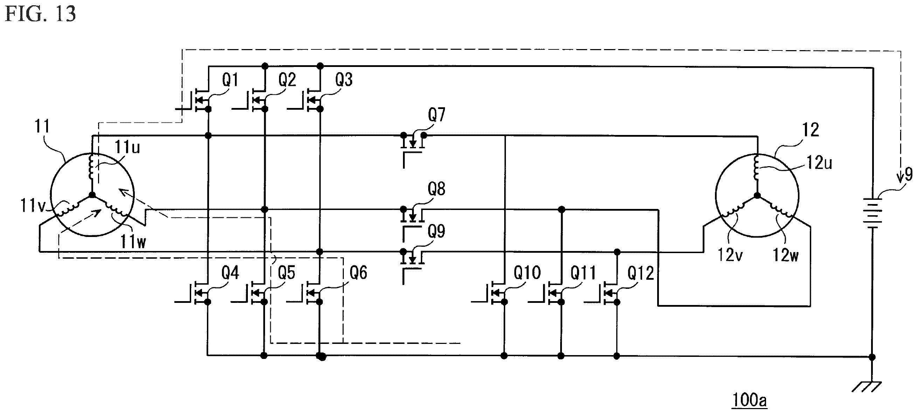

Next, another configuration example of the power conversion unit 6 shown in FIG. 1 will be described with reference to FIG. 9 to FIG. 13. FIG. 9 is a circuit diagram showing the power conversion unit 6 shown in FIG. 1 (power conversion unit 6a shown in FIG. 9) and the winding portions 11 and 12. FIG. 10 is a diagram showing an example of energization modes of the power conversion unit 6a shown in FIG. 9. FIG. 11 is a diagram showing an example of a current flow in the circuit diagram shown in FIG. 9. FIG. 12 is a diagram showing an example of energization modes of the power conversion unit 6a shown in FIG. 9. FIG. 13 is a diagram showing an example of a current flow in the circuit diagram shown in FIG. 9.

Here, the same reference numerals are appended to the same configurations between FIGS. 3 and 9, and a description thereof is omitted. A starting power generation control system 100a shown in FIG. 9 has a configuration corresponding to that of the starting power generation control system 100 shown in FIGS. 1 and 3, but differs therefrom in a configuration of the power conversion unit 6a. Here, the power conversion unit 6a has a configuration corresponding to that of the power conversion unit 6 shown in FIG. 3. In this case, the power conversion unit 6a newly includes MOSFET (Q10), MOSFET (Q11), and MOSFET (Q12) in an orthogonal transformation unit 61a. The orthogonal transformation unit 61a has a configuration corresponding to that of the orthogonal transformation unit 61 shown in FIG. 3. In this case, a drain of MOSFET (Q10) is connected to a drain of MOSFET (Q7). A drain of MOSFET (Q11) is connected to a drain of MOSFET (Q8). A drain of MOSFET (Q12) is connected to a drain of MOSFET (Q9). Sources of MOSFET (Q10), MOSFET (Q11), and MOSFET (Q12) are connected in common to the respective sources of MOSFET (Q4), MOSFET (Q5), and MOSFET (Q6).

FIG. 10(A) shows the energization modes of the motor control using both the winding portion 11 and the winding portion 12. Energization modes M101 to M106 shown in FIG. 10(A) differ from the energization modes M1 to M6 shown in FIG. 4(A) in the following points. In other words, in the energization modes M101 to M106 shown in FIG. 10(A), operations in each mode of MOSFETs (Q7) to (Q9) are the same as those of MOSFETs (Q1) to (Q3). Additionally, in the energization modes M101 to M106 shown in FIG. 10(A), operations in each mode of newly provided MOSFETs (Q10) to (Q12) are the same as those of MOSFETs (Q4) to (Q6).

On the other hand, FIG. 10(B) shows the energization mode for the motor control using only the winding unit 11. Energization modes M107 to M112 shown in FIG. 10(B) differ from the energization modes M7 to M12 shown in FIG. 4(B) in the following points. In other words, in the energization modes M107 to M112 shown in FIG. 10(B), newly provided MOSFETs (Q10) to (Q12) are all OFF in each mode.

FIG. 11 shows paths of current in the energization mode M101 shown in FIG. 10(A) by a dashed arrow and a chained arrow. The path indicated by the dashed arrow is the flow of the current flowing through the winding portion 11. The path indicated by the chained arrow is the flow of the current flowing through the winding portion 12. In this case, MOSFET (Q1) is ON, MOSFET (Q2) is OFF, MOSFET (Q3) is OFF, MOSFET (Q4) is OFF, MOSFET (Q5) is ON, and MOSFET (Q6) is ON. Additionally, MOSFET (Q7) is ON, MOSFET (Q8) is OFF, and MOSFET (Q9) is OFF. Further, MOSFET (Q10) is OFF, MOSFET (Q11) is ON, and MOSFET (Q12) is ON. As shown in FIG. 11, the current flowing through the winding portion 11 indicated by the dashed arrow flows through MOSFET (Q5) or (Q6). Additionally, the current flowing through the winding portion 12 indicated by the chained arrow flows through MOSET (Q11) or (Q12). Thus, the energization modes M101 to M106 shown in FIG. 10(A), it is possible to switch a set of MOSFETs through which the current flows from the winding portion 11 or the winding portion 12 to the ground side (low side).

On the other hand, the energization mode M107 shown in FIG. 10(B), the path indicated by the chained arrow passing through the winding portion 12 shown in FIG. 11 is cut off, current flows only through the path indicated by the dashed arrow passing through the winding portion 11. In this case, MOSFET (Q1) is ON, MOSFET (Q2) is OFF, MOSFET (Q3) is OFF, MOSFET (Q4) is OFF, MOSFET (Q5) is ON, and MOSFET (Q6) is ON. Additionally, MOSFETs (Q7) to (Q12) are all OFF.

Next, FIG. 12(A) shows energization modes for the power generation control using only the winding unit 11. Energization modes G101 to G106 shown in FIG. 12(A) differ from the energization modes G1 to G6 shown in FIG. 6(A) in the following points. In other words, in the energization modes G101 to G106 shown in FIG. 12(A), newly provided MOSFETs (Q10) to (Q12) are all "OFF^{∗}" in each mode. On the other hand, operations in each mode of MOSFETs (Q1) to (Q9) are the same.

On the other hand, FIG. 12(B) shows energization modes for the power generation control using the winding portion 11 and the winding portion 12. Energization modes G107 to G112 shown in FIG. 12(B) differ from the energization modes G7 to G12 shown in FIG. 6(B) in the following points. In other words, energization modes G107 to G112 shown in FIG. 12(B), operations in each mode of MOSFETs (Q10) to (Q12) are the same as those of MOSFETs (Q4) to (Q6).

FIG. 13 shows paths of current in the energization mode G101 shown in FIG. 12(A) by dashed arrows. The path indicated by the dashed arrows are the flows of the current flowing through the winding portion 11. In this case, MOSFET (Q1) is ON, MOSFET (Q2) is OFF, MOSFET (Q3) is OFF, MOSFET (Q4) is OFF, MOSFET (Q5) is ON, and MOSFET (Q6) is ON. Additionally, MOSFETs (Q7) to (Q9) are all ON. Further, MOSFET (Q10) is OFF, MOSFET (Q11) is ON, and MOSFET (Q12) is ON.

According to the power conversion unit 6a shown in FIG. 9, by providing the two sets of MOSFETs on the negative side, it is possible to limit the current flowing through MOSFETs on the negative side, and reduce the heat generation of each MOSFET.

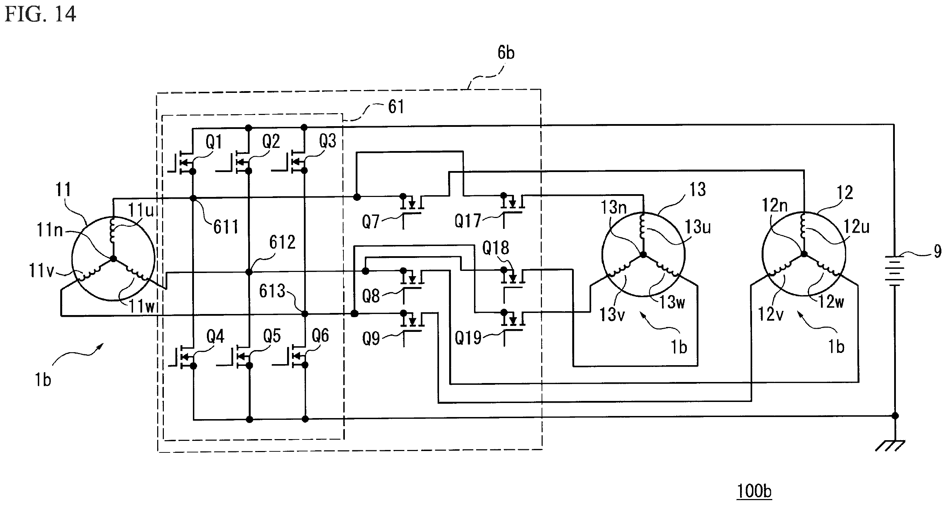

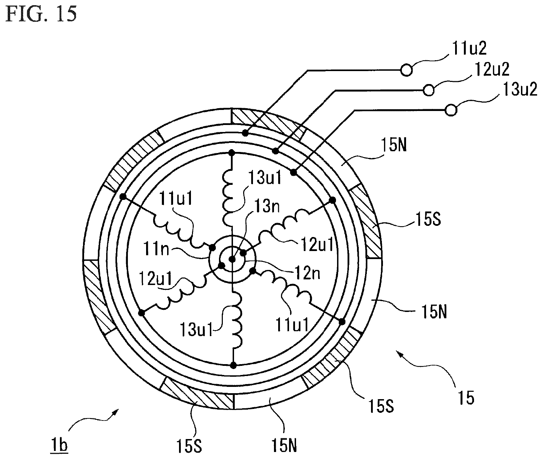

Next, another embodiment of the present invention will be described with reference to FIGS. 14 and 15. FIG. 14 is a block diagram showing a configuration example of a starting power generation control system (starter generator apparatus) 100b of an embodiment of the present invention. The starting power generation control system 100b shown in FIG. 14 differs from the starting power generation control system 100 shown in FIG. 3 in the following point. In other words, the starting power generation control system 100b shown in FIG. 14 newly includes a winding portion 13, and a power converter section 6a newly includes MOSFETs (Q17) to (Q19) (switching elements), compared to the power conversion unit 6. Here, the same reference numerals are appended to the same configurations between FIG. 14 and FIG. 3, and a description thereof is omitted.

In FIG. 14, the starter generator 1b is directly coupled to the crankshaft 3, similarly to the starter generator 1 shown in FIG. 1, and rotates in synchronization with the rotation of the engine 2. The starter generator 1b operates as a starter motor or an ACG under control of the power conversion unit 6b. The starter generator 1b includes the winding portion 11, the winding portion 12, and the winding portion 13. The winding unit 13 includes coils 13u, 13v, 13w which constitute a star-connected three-phase coil (polyphase coil). A neutral point 13n is a neutral point of the star connection that constitutes the winding portion 13. The coils 11u to 11w, the coils 12u to 12w, and the coils 13u to 13w are wound on the same armature core (not shown), which are a set of armature windings electrically insulated from one another. Here, the winding portion 11, the winding portion 12, the winding portion 13, and the armature core (not shown) constitute an armature unit.

Three MOSFETs (Q17), (Q18), (Q19) are interposed between each end portion of the coils 13u, 13w, 13v of the winding portion 13 and each of the AC terminals 611, 612, 613 of the orthogonal transformation unit 61 connected to the respective coils 11u, 11w, 11v of the winding unit 11. Additionally, three MOSFETs (Q17), (Q18), (Q19) turn on or off to connect or disconnect the end portions of the coil 13u, 13w, 13v of the winding portion 13 to or from the respective AC terminals 611, 612, 613. Here, energization modes of MOSFETs (Q17), (Q18), (Q19) for the winding portion 13 are similar to those of MOSFETs (Q7), (Q8), (Q9) for the winding portion 12, and therefore a description thereof is omitted.

Additionally, drains of MOSFETs (Q17), (Q18), (Q19) are connected to the end portions of the respective coils 13u, 13w, 13v. Accordingly, a cathode of a parasitic diode (not shown) between the drain and the source is connected to the end portion of the corresponding one of the coil 13u, 13w, 13v of the winding portion 13.

FIG. 15 is a diagram, viewed from an axial direction, schematically showing a configuration example of the winding portion 11, the winding unit 12, the winding portion 13, and the field portion 15 of the starter generator 1b. Here, FIG. 15 shows only the coil 11u, the coil 12u, and the coil 13u. Here, the same reference numerals are appended to the same configurations between FIG. 15 and FIG. 2, and a description is omitted. In the configuration example shown in FIG. 15, the starter generator 1b is an outer rotor type brushless motor where the field portion 15 is constituted of plural pairs of N-pole permanent magnets 15N and S-pole permanent magnets 15S. The coil 11u is constituted of two windings arranged at 180-degree intervals with respect to the armature core (not shown). One ends of two windings of the coil 11u are connected in common to the neutral point 11n, while the other ends thereof are connected in common to the terminal 11u2. The coil 12u is constituted of two windings arranged at 180-degree intervals with respect to the armature core (not shown) and is shifted by 60 degree from the coil 11u. One ends of two windings of the coil 12u are connected in common to the neutral point 12n, while the other ends thereof are connected in common to the terminal 12u2. Additionally, the coil 13u is constituted of two windings arranged at 180-degree intervals with respect to the armature core (not shown) and is shifted by 60 degree from the coil 12u. One ends of two windings of the coil 13u are connected in common to a neutral point 13n, while the other ends thereof are connected in common to a terminal 13u2.

According to the starting power generation control system 100b shown in FIG. 14 and FIG. 15, it is possible to perform the motor control and the power generation control by selecting the windings 11 to 13 as follows. In other words, it is possible to select one of four cases which are: a case where only the winding portion 11 is used; a case where the winding portion 11 and the winding portion 12 are used; a case where the winding portion 11 and the winding portion 13 are used; and a case where the winding portion 11, the winding portion 12, and the winding portion 13 are used. In this case, by varying the specifications of the winding portion 12 and the winding portion 13 (the number of turns, wire diameter, etc.), it is possible to select, from four levels, the generated torque in the motor control and the power output in the power generation control.

### DESCRIPTION OF REFERENCE NUMERALS

100, 100a, 100b starting power generation control system
1, 1a, 1b starter generator
6, 6a, 6b power conversion unit
7 control unit
D7 to D9 parasitic diode
Q1 to Q12, Q17 to Q19 MOSFET
11, 12, 13 winding portion
11u, 11v, 11w, 12u, 12v, 12w, 13u, 13v, 13w coil (winding)
15 field magnet portion
61, 61a orthogonal transformation unit
611, 612, 612 AC terminals (first AC terminal)

## Claims

1. A starter generator apparatus (100, 100a, 100b) comprising:
a starter generator (1) including
an armature unit including a first winding portion (11) and a second winding portion (12) which are arranged in parallel, each of the first winding portion (11) and the second winding portion (12) including a polyphase coil, and
an orthogonal transformation unit (61) having a plurality of alternate terminals (611-613) connected to the first winding portion (11) and configured to bidirectionally convert electric power between direct current and alternate current;
a battery (9) having
a positive terminal connected to an input terminal (614) of the orthogonal transformation unit (61), and
a negative terminal connected to an output terminal (615) of the orthogonal transformation unit (61);
a plurality of switching elements (Q7-Q9) each interposed between one of the plurality of alternate terminals (611-613) and the second winding portion (12) and each configured to perform connection and disconnection of the second winding portion (12) to and from the one of the plurality of alternate terminals (611-613); and
a control unit (7) configured to control the orthogonal transformation unit (61) and the plurality of switching elements (Q7-Q9), **characterized in that** the starter generator (1) includes a field unit (15) including a permanent magnet; and **in that**
the control unit (7) is configured to,
when the starter generator (1) is used as a starter motor for starting an engine, select, by the plurality of switching elements (Q7-Q9), either one or both of the first winding portion (11) and the second winding portion (12), based on a magnitude of a load of a piston of the engine and a coolant temperature of the engine, and
when the starter generator (1) is used as a power generator, select, by the plurality of switching elements (Q7-Q9), either one or both of the first winding portion (11) and the second winding portion (12), based on a voltage of the battery (9).

2. The starter generator apparatus (100, 100a, 100b) according to claim 1, wherein
the plurality of switching elements (Q7-Q9) are MOSFETs, and
orientations of parasitic diodes (D7-D9) of the MOSFETs are the same with respect to the plurality of alternate terminals (611-613).

3. The starter generator apparatus (100, 100a, 100b) according to claims 1 or 2, wherein
the plurality of switching elements (Q7-Q9), when turned off, are sequentially turned off in accordance with a magnitude of a current flowing through each of the plurality of switching elements (Q7-Q9).

4. A starting power generating method for the starter generator apparatus (100, 100a, 100b) according to any one of claims 1 to 3 and further **characterized in that** the starting power generating method comprising steps of:
when the starter generator (1) is used as a starter motor for starting an engine, selecting, by the plurality of switching elements (Q7-Q9), either one or both of the first winding portion (11) and the second winding portion (12), based on a magnitude of a load of a piston of the engine and a coolant temperature of the engine; and
when the starter generator (1) is used as a power generator, selecting, by the plurality of switching elements (Q7-Q9), either one or both of the first winding portion (11) and the second winding portion (12), based on a voltage of the battery (9).

## Patentansprüche

1. Startergeneratoreinrichtung (100, 100a, 100b), umfassend:
einen Startergenerator (1), der Folgendes beinhaltet:
eine Ankereinheit, die einen ersten Wicklungsabschnitt (11) und einen zweiten Wicklungsabschnitt (12) beinhaltet, die parallel angeordnet sind, wobei jeder von dem ersten Wicklungsabschnitt (11) und dem zweiten Wicklungsabschnitt (12) eine mehrphasige Spule beinhaltet, und
eine orthogonale Transformationseinheit (61), die eine Vielzahl von sich abwechselnden Anschlüssen (611-613) aufweist, die mit dem ersten Wicklungsabschnitt (11) verbunden und dazu konfiguriert sind, elektrische Leistung zwischen Gleichstrom und Wechselstrom bidirektional umzuwandeln;
eine Batterie (9), die Folgendes aufweist:
einen positiven Anschluss, der mit einem Eingangsanschluss (614) der orthogonalen Transformationseinheit (61) verbunden ist, und
einen negativen Anschluss, der mit einem Ausgangsanschluss (615) der orthogonalen Transformationseinheit (61) verbunden ist;
eine Vielzahl von Schaltelementen (Q7-Q9), wobei jedes zwischen einem von der Vielzahl von sich abwechselnden Anschlüssen (611-613) und dem zweiten Wicklungsabschnitt (12) angeordnet ist und jedes dazu konfiguriert ist, eine Verbindung des zweiten Wicklungsabschnitts (12) mit dem einem von der Vielzahl von sich abwechselnden Anschlüssen (611-613) und eine Trennung von diesem durchzuführen; und
eine Steuereinheit (7), die dazu konfiguriert ist, die orthogonale Transformationseinheit (61) und die Vielzahl von Schaltelementen (Q7-Q9) zu steuern, **dadurch gekennzeichnet, dass** der Startergenerator (1) eine Feldeinheit (5) beinhaltet, die einen Dauermagneten beinhaltet; und dadurch, dass die Steuereinheit (7) dazu konfiguriert ist,
wenn der Startergenerator (1) als ein Anlasser zum Starten eines Motors verwendet wird, durch die Vielzahl von Schaltelementen (Q7-Q9) entweder einen oder beide von dem ersten Wicklungsabschnitt (11) und dem zweiten Wicklungsabschnitt (12) auf Grundlage einer Größe einer Last eines Kolbens des Motors und einer Kühlmitteltemperatur des Motors auszuwählen, und
wenn der Startergenerator (1) als ein Stromerzeuger verwendet wird, durch die Vielzahl von Schaltelementen (Q7-Q9) entweder einen oder beide von dem ersten Wicklungsabschnitt (11) und dem zweiten Wicklungsabschnitt (12) auf Grundlage einer Spannung der Batterie (9) auszuwählen.

2. Startergeneratoreinrichtung (100, 100a, 100b) nach Anspruch 1, wobei es sich bei der Vielzahl von Schaltelementen (Q7-Q9) um MOSFETs handelt und
Ausrichtungen von parasitären Dioden (D7-D9) der MOSFETs in Bezug auf die Vielzahl von sich abwechselnden Anschlüssen (611-613) gleich sind.

3. Startergeneratoreinrichtung (100, 100a, 100b) nach Anspruch 1 oder 2, wobei
die Vielzahl von Schaltelementen (Q7-Q9), wenn sie ausgeschaltet werden, gemäß einer Größe eines Stroms, der durch jedes von der Vielzahl von Schaltelementen (Q7-Q9) fließt, nacheinander ausgeschaltet werden.

4. Startleistungsgenerierungsverfahren für die Startergeneratoreinrichtung (100, 100a, 100b) nach einem der Ansprüche 1 bis 3 und ferner **dadurch gekennzeichnet, dass** das Startleistungsgenerierungsverfahren die folgenden Schritte umfasst:
wenn der Startergenerator (1) als ein Anlasser zum Starten eines Motors verwendet wird, Auswählen von einem oder beiden von dem ersten Wicklungsabschnitt (11) und dem zweiten Wicklungsabschnitt (12) durch die Vielzahl von Schaltelementen (Q7-Q9) auf Grundlage einer Größe einer Last eines Kolbens des Motors und einer Kühlmitteltemperatur des Motors; und wenn der Startergenerator (1) als ein Stromerzeuger verwendet wird, Auswählen von einem oder beiden von dem ersten Wicklungsabschnitt (11) und dem zweiten Wicklungsabschnitt (12) durch die Vielzahl von Schaltelementen (Q7-Q9) auf Grundlage einer Spannung der Batterie

## Revendications

1. Appareil à génératrice de démarrage (100, 100a, 100b) comprenant :
une génératrice de démarrage (1) comportant
une unité d'induit comportant une première portion d'enroulement (11) et une seconde portion d'enroulement (12) qui sont agencées en parallèle, chacune de la première portion d'enroulement (11) et de la seconde portion d'enroulement (12) comportant une bobine polyphasée, et
une unité de transformation orthogonale (61) ayant une pluralité de bornes alternées (611 à 613) connectée à la première portion d'enroulement (11) et configurée pour convertir de façon bidirectionnelle une alimentation électrique entre courant continu et courant alternatif ;
une batterie (9) ayant
une borne positive connectée à une borne d'entrée (614) de l'unité de transformation orthogonale (61), et
une borne négative connectée à une borne de sortie (615) de l'unité de transformation orthogonale (61) ;
une pluralité d'éléments de commutation (Q7 à Q9) interposés chacun entre l'une de la pluralité de bornes alternées (611 à 613) et la seconde portion d'enroulement (12) et configurés chacun pour effectuer une connexion et une déconnexion de la seconde portion d'enroulement (12) à et depuis l'une de la pluralité de bornes alternées (611 à 613) ; et
une unité de commande (7) configurée pour commander l'unité de transformation orthogonale (61) et la pluralité d'éléments de commutation (Q7 à Q9), **caractérisée en ce que** la génératrice de démarrage (1) comporte une unité de champ (5) comportant un aimant permanent, et **en ce que** l'unité de commande (7) est configurée pour,
lorsque la génératrice de démarrage (1) est utilisée en tant que moteur de démarrage pour démarrer un moteur thermique, sélectionner, par la pluralité d'éléments de commutation (Q7 à Q9), soit l'une soit les deux parmi la première portion d'enroulement (11) et la seconde portion d'enroulement (12), d'après une grandeur d'une charge d'un piston du moteur thermique et une température de liquide de refroidissement du moteur thermique, et
lorsque la génératrice de démarrage (1) est utilisée en tant que génératrice d'alimentation, sélectionner, par la pluralité d'éléments de commutation (Q7 à Q9), soit l'une soit les deux parmi la première portion d'enroulement (11) et la seconde portion d'enroulement (12), d'après une tension de la batterie (9).

2. Appareil à génératrice de démarrage (100, 100a, 100b) selon la revendication 1, dans lequel
la pluralité d'éléments de commutation (Q7 à Q9) sont des MOSFET, et
les orientations de diodes parasites (D7 à D9) des MOSFET sont les mêmes par rapport à la pluralité de bornes alternées (611 à 613).

3. Appareil à génératrice de démarrage (100, 100a, 100b) selon les revendications 1 ou 2, dans lequel
la pluralité d'éléments de commutation (Q7 à Q9), lorsqu'ils sont désactivés, sont désactivés séquentiellement conformément à une grandeur d'un courant circulant dans chacun de la pluralité d'éléments de commutation (Q7 à Q9).

4. Procédé de génération d'alimentation de démarrage pour l'appareil à génératrice de démarrage (100, 100a, 100b) selon l'une quelconque des revendications 1 à 3 et **caractérisé en outre en ce que** le procédé de génération d'alimentation de démarrage comprend des étapes de :
lorsque la génératrice de démarrage (1) est utilisée en tant que moteur de démarrage pour démarrer un moteur thermique, sélection, par la pluralité d'éléments de commutation (Q7 à Q9), soit de l'une soit des deux parmi la première portion d'enroulement (11) et la seconde portion d'enroulement (12), d'après une grandeur d'une charge d'un piston du moteur thermique et une température de liquide de refroidissement du moteur thermique ; et
lorsque la génératrice de démarrage (1) est utilisée en tant que génératrice d'alimentation, sélection, par la pluralité d'éléments de commutation (Q7 à Q9), soit de l'une soit des deux parmi la première portion d'enroulement (11) et la seconde portion d'enroulement (12), d'après une tension de la batterie (9).
